(19) Europäisches Patentamt
European Patent Office
Office européen des brevets

(11) Veröffentlichungsnummer: **0 354 432 B1**

(12) **EUROPÄISCHE PATENTSCHRIFT**

(45) Veröffentlichungstag der Patentschrift: **19.05.93**

(51) Int. Cl.$^5$: **C09D 175/04**, B05D 1/20, //C08G18/32,C08G18/72

(21) Anmeldenummer: **89114061.8**

(22) Anmeldetag: **29.07.89**

# (54) Beschichtete Träger mit ultradünner, ein- oder mehrlagiger Beschichtung, Verfahren zu ihrer Herstellung und Polyurethane als Zwischenprodukte für die beschichteten Träger.

(30) Priorität: **12.08.88 DE 3827438**

(43) Veröffentlichungstag der Anmeldung:
**14.02.90 Patentblatt 90/07**

(45) Bekanntmachung des Hinweises auf die Patenterteilung:
**19.05.93 Patentblatt 93/20**

(84) Benannte Vertragsstaaten:
**AT BE CH DE FR GB IT LI NL SE**

(56) Entgegenhaltungen:
**EP-A- 0 077 105**
**EP-A- 0 219 325**
**EP-A- 0 246 602**
**US-A- 3 307 948**
**US-A- 4 546 120**
**EP-A- 0 165 150**
**EP-A- 0 232 829**
**US-A- 2 936 293**
**US-A- 3 358 005**

(73) Patentinhaber: **BAYER AG**

**W-5090 Leverkusen 1 Bayerwerk(DE)**

(72) Erfinder: **Wehrmann, Rolf, Dr.**
**Buschstrasse 163**
**W-4150 Krefeld 1(DE)**
Erfinder: **Schopper, Heinrich-Christian, Dr.**
**Glindholzstrasse 95a**
**W-4150 Krefeld 1(DE)**
Erfinder: **Nerger, Dittmar K., Dr.**
**c/o Mobay Corporation Mobay Road**
**Pittsburgh Pennsylvania 15205-9741(US)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die vorliegende Erfindung betrifft neue beschichtete Träger mit ultradünner, ein oder mehrlagiger Beschichtung, bei denen das Beschichtungsmaterial ein Polyurethan ist, weiterhin ein Verfahren zur Herstellung solcher beschichteter Träger und neue Polyurethane als Zwischenprodukte für diese beschichteten Träger.

Beschichtete Träger finden in der industriellen Technik mannigfaltige Verwendung. Beispielsweise können die Reibungseigenschaften von Materialien durch Modifizierung der Oberfläche einem gewünschten Zweck angepaßt werden. Weiterhin kann es sich um einen Schutzfilm für die darunterliegenden Träger handeln, um deren besondere Oberflächeneigenschaften zu konservieren. Insbesondere haben jedoch in letzter Zeit beschichtete Träger als Komponenten in Bauelementen für die optische Kommunikationstechnik sowie als elektronische und optoelektronische Informationsspeicher Einsatz gefunden.

Insbesondere für die elektronischen und optischen Einsatzzwecke ist es erforderlich, ultradünne, defektfreie mehrlagige Beschichtungen zu erzeugen, deren Lagen einen hohen Ordnungsgrad und eine einstellbare, möglichst homogene Schichtdicke haben, wobei dieser hohe Ordnungsgrad auch im Bereich hoher Anzahl von Beschichtungslagen erhalten bleiben soll.

Die aus den organischen Polymeren hergestellten dünnen Schichten stellen hierbei die Grundlage für auf molekularer Ebene geordnete, defektfreie Systeme dar, wie sie z.B. erforderlich sind für

- optische Anwendungen (gerichtete Strahlung geringer Dämpfung, z.B. Lichtwellenleiter mit nichtlinearoptischen Eigenschaften),
- elektrische Anwendungen (elektrische Leiter hoher Anisotropie, z.B. eindimensionale oder zweidimensionale Leiter auf dem Gebiet der Molekularelektronik),
- "Wirtsgitter" für den definierten Einbau bzw. eine specifische Bindung von funktionellen Gruppen oder Molekülen (z.B. Biomoleküle für Sensoren).

Es ist bereits bekannt, aus amphiphilen niedermolekularen Molekülen mit je einem polaren bzw. nichtpolaren Ende, wie etwa langkettigen Fettsäuren, auf der Oberfläche eines Nichtlösemittels wie Wasser monomolekulare Schichten zu erzeugen, in denen alle polaren Enden beispielsweise zum Wasser zeigen, während die unpolarent Enden in den Gasraum darüber hineinragen. Hierzu werden geringe Mengen solcher amphiphiler Stoffe in einem geeigneten Lösungsmittel gelöst und beispielsweise auf eine Wasseroberfläche ausreichender Größe gegeben, wo sie unter Verdunsten des Lösungsmittels zu einer zunächst nicht zusammenhängenden monomolekularen Schicht spreiten. Durch Verschieben einer geeigneten Barriere wird die Wasseroberfläche verkleinert und die damit verbundene Zunahme der Oberflächenspannung als Funktion der noch zur Verfügung stehenden Fläche gemessen (d.h. Aufnahme der dem Fachmann bekannten Schub-Flächen-Diagramme, auch $\pi$/A-Isotherme genannt).

Dabei ergibt sich eine zusammenhängende, auf molekularer Ebene geordnete monomolekulare Schicht. Beim Erreichen dieses quasi-festen Zustandes dieser monomolekularen Schicht wird dem weiteren Verschieben dieser Barriere ein deutlich meßbarer Widerstand entgegengesetzt, der das Erreichen dieses Zustandes anzeigt. Geeignete Träger können sodann durch die monomolekulare Schicht in das Wasser getaucht werden und überziehen sich beim Eintauchen und/oder Herausziehen ihrerseits mit einer monomolekularen Schicht des amphiphilen Stoffes, wobei die molekulare Ordnung in den Einzelschichten erhalten bleibt.

Der genannte Vorgang läßt sich wiederholen. Diese Beschichtungstechnik ist als Langmuir-Blodgett-Technik dem Fachmann bekannt.

Beschichtungen aus monomeren amphiphilen Stoffen sind jedoch chemisch, thermisch und mechanisch instabil, d.h. die molekulare Ordnung kann durch chemische und/oder physikalische Einflüsse verloren gehen. Man hat daher versucht, amphiphile Stoffe mit einer reaktionsfähigen Doppel- oder Mehrfachbindung auf Träger aufzuziehen und nachträglich beispielsweise durch energiereiche Strahlung zu einem Polymer zu vernetzen.

Vielfach untersuchte Beispiele für die Polymerisation ungesättigter amphiphiler Stoffe sind Diacetylencarbonsäuren und Trikosensäure. Die gravierenden Nachteile dieser Stoffe sind ihre hohe Reaktivität, wodurch sie häufig nur schwer in reiner Form zu erhalten sind. Im Verlaufe der Polymerisation nach der Übertragung auf den Träger entstehen durch Schrumpf oft Defekte, wie makroskopische Risse in der Beschichtung.

Es hat auch bereits Versuche gegeben, polymere Stoffe wie Polystyrol und Polymethylmethacrylat in die Langmuir-Blodgett-Technik einzubeziehen. Polymere bringen jedoch einerseits durch die statische Unordnung in der Polymerkette, andererseits auch durch Überstrukturen der Polymeren Schwierigkeiten in der Ausrichtung der polaren bzw. der nicht-polaren Strukturanteile mit sich. Daher ist stets zu untersuchen, ob die Amphiphilie (d.h. der Polaritätsunterschied zwischen den polaren und den unpolaren Gruppen)

ausreichend ist, um Beschichtungen hoher molekularer Ordnung und hoher Reproduzierbarkeit zu erzielen. Hierbei wird häufig die sogenannte Y–Struktur angestrebt, bei der in mehrlagigen Beschichtungen von einer Lage zur anderen sich jeweils die polaren bzw. die unpolaren Strukturelemente gegenüberstehen. Für spezielle Anwendungen, z.B. nichtlinearoptisch aktive Schichten kann diese Y–Struktur von Nachteil sein; mit den weiter unten beschriebenen Polyurethanen lassen sich unter geeigneten experimentellen Bedingungen auch Schichten des X– bzw. Z–Typs herstellen. In Journal of Molekular Elektronics 1 (1985), 3–17 sind die angesprochenen Sachverhalte ausführlich dargestellt.

Es wurden nun beschichtete Träger mit ultradünner, ein– oder mehrlagiger Beschichtung aus organischem Polymermaterial gefunden, die dadurch gekennzeichnet sind, daß als Polymer Polyurethane der Struktur

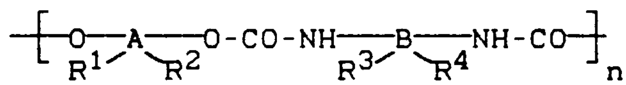

(I)

eingesetzt werden, worin

A das Gerüst eines aliphatischen, araliphatischen oder aromatischen Diols ist,

B das Gerüst eines aliphatischen, araliphatischen oder aromatischen Diisocyanats ist,

n Werte von 2 bis 150 annimmt und

mindestens einer der Substituenten $R^1$ bis $R^4$ einen im wesentlichen normalkettigen aliphatischen Rest darstellt und jeweils die anderen Wasserstoff bedeuten, wobei der aliphatische Rest mindestens 4 C–Atome aufweist und die Zahl der C–Atome von der endständigen Methylgruppe des aliphatischen Restes über das Gerüst A bzw. B bis zur Urethanbindung 6 bis 40 beträgt, wobei diese Kette von C–Atomen im Bereich des Gerüsts A bzw. B ein O–Atom oder N–Atom enthalten kann, und wobei ferner $R^1$ und $R^2$ gemeinsam und $R^3$ und $R^4$ gemeinsam eine Alkylenkette bilden können.

Es wurde weiterhin ein Verfahren zur Herstellung solcher beschichteter Träger gefunden, das dadurch gekennzeichnet ist, daß man eine Lösung der genannten Polyurethane auf die Oberfläche einer Flüssigkeit, in der sich weder das Polyurethan noch dessen Lösungsmittel lösen, bringt und ein Substrat nach der Langmuir–Blodgett–Technik mit der gewünschten Anzahl von Beschichtungslagen versieht.

Die Erfindung betrifft weiterhin als wesentlichen Anteil die genannten neuen Polyurethane als Zwischenprodukte für die beschichteten Träger.

In den Polyurethanen der Formel (I) stellen die Urethanbindungen jeweils die polaren Gruppen dar, während die im wesentlichen normalkettigen aliphatischen Reste $R^1$ bis $R^4$ die unpolaren Gruppen darstellen. Die aliphatischen Reste sind im wesentlichen normalkettig, d.h. sie haben einen Verzweigungsgrad von maximal einer Methylgruppe pro 8 Kohlenstoffatomen in der Kette. Bei sehr langen Ketten kann es sich bei der Verzweigung auch um $C_2$–$C_4$–Kurzketten im Rahmen des genannten Verzweigungsgrades handeln. In bevorzugter Weise sind jedoch strikt normalkettige aliphatische Reste im erfindungsgemäßen Polyurethan vorhanden.

Von den Substituenten $R^1$ bis $R^4$ stellt mindestens einer einen im wesentlichen normalkettigen aliphatischen Rest dar, während diejenigen Substituenten $R^1$ bis $R^4$, die nicht solche aliphatischen Reste bedeuten, für Wasserstoff stehen. Die aliphatischen Reste weise mindestens 4 C–Atome, beispielsweise 4–38, bevorzugt 6–28, besonders bevorzugt 6–22 C–Atome auf. Die aliphatischen Reste sind an das Kohlenstoffgerüst A bzw. B gebunden. In einem solchen Fall beträgt die Zahl der C–Atome von der endständigen Methylgruppe des aliphatischen Restes über das Gerüst A bzw. B bis zur Urethanbindung 6–40, bevorzugt 8–30, besonders bevorzugt 8–24. Es ist aber beispielsweise bei Polyolen auch möglich, im wesentlichen normalkettige aliphatische Reste an eine oder mehrere Hydroxylgruppen zu binden, so daß von allen OH–Gruppen noch zwei bestehen bleiben, aus dem Polyol also in jedem Falle ein Diol wird. In solchen Fällen enthält die Kette von C–Atomen des aliphatischen Restes im Bereich des Gerüst A bzw. B ein O–Atom. Für den Fall, daß das Diol ein N–Atom enthält (z.B. im N,N–Di–hydroxyethyl–amin), das langkettig alkyliert oder quaternisiert werden kann, ergibt sich die Bindung des aliphatischen Restes mit dem Gerüst des Diols über ein N–Atom.

Obwohl die Substituenten $R^1$ und $R^2$ bzw. $R^3$ und $R^4$ grundsätzlich verschiedene Kettenlänge haben können, ist es doch bevorzugt, daß $R^1$ und $R^2$ gleich sind und $R^3$ und $R^4$ ebenfalls gleich sind, aber verschieden sein können von $R^1$ und $R^2$. Bevorzugte Polyurethane sind solche, in denen $R^1$ oder $R^1$ und $R^2$ einen aliphatischen Rest darstellen und $R^3$ und $R^4$ Wasserstoff bedeuten. Besonders bevorzugt sind Polyurethane in denen $R^1$ und $R^2$ einen aliphatischen Rest darstellen und $R^3$ und $R^4$ Wasserstoff bedeuten. Des weiteren können $R^1$ und $R^2$ gemeinsam und ebenfalls $R^3$ und $R^4$ gemeinsam eine Alkylenkette bilden,

die beispielsweise 2 x 4 = 8 bis etwa 40 C – Atome haben kann. Bevorzugt bilden auch in diesem Fall nur $R^1$ und $R^2$ gemeinsam eine Alkylenkette, während $R^3$ und $R^4$ Wasserstoff bedeuten.

Im wesentlichen normalkettige aliphatische Reste und aus $R^1$ und $R^2$ gemeinsam bzw. $R^3$ und $R^4$ gemeinsam gebildete Alkylenketten der genannten Art sind dem Fachmann geläufig.

Polyurethane der Formel (I) können aus Diolen der Formel

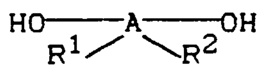

(II)

und Diisocyanaten der Formel

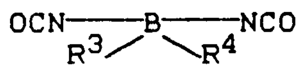

(III),

in denen
$R^1$, $R^2$, $R^3$ und $R^4$ die obengenannte Bedeutung besitzen,
in einer dem Fachmann bekannten Weise hergestellt werden.

Grundsätzlich können an die Stelle der Diisocyanate (III) auch die Bis – carbamidsäurechloride der Formel

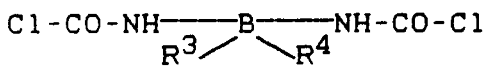

(IV)

treten, in der
$R^3$ und $R^4$ ebenfalls die obengenannte Bedeutung haben.

Wegen der wohlbekannten Polyurethan – Reaktionstechnik ist es jedoch bevorzugt, die Diole (II) mit den Diisocyanaten (III) umzusetzen, wobei gleichzeitig die Abspaltung von korrosivem Chlorwasserstoff vermieden wird.

A und B können unabhängig voneinander das Gerüst eines aliphatischen, cycloaliphatischen, aromatischen oder araliphatischen Diols bzw. Diisocyanats (gegebenenfalls Bis – carbamidsäurechlorids) sein. Der aliphatische Teil kann beispielsweise 2 – 32, bevorzugt 3 – 20, besonders bevorzugt 4 – 12 C – Atome haben. Der cycloaliphatische Teil kann beispielsweise 6 – 15, bevorzugt 6 – 12, besonders bevorzugt 6 – 8 C – Atome haben. Der aliphatische Teil kann beispielsweise 7 – 15, bevorzugt 7 – 10 C – Atome haben. Der aromatische Teil kann beispielsweise 6 – 15, bevorzugt 6 – 12, besonders bevorzugt 6 – 10 C – Atome haben. Solche Reste sind dem Fachmann aus der Polyurethanchemie für Diole bzw. Diisocyanate (bzw. Bis – carbamidsäurechloride) bekannt.

Aromatische Teile für A bzw. B können weiterhin durch eine $C_1 - C_6$ – Alkylen – bzw. Cycloalkylen – gruppe verknüpft sein.

Aliphatische Teile für A können weiterhin verzweigt sein und 1 bis 3 weitere OH – Gruppen, bevorzugt 1 oder 2 weitere OH – Gruppen tragen, an die der im wesentlichen normalkettige aliphatische Rest gebunden ist, so daß letztendlich ein Diol verbleibt. Beispiele für Diole der letztgenannten Art sind: Glycerinmonostearat, Trimethylolpropan – monostearat oder Pentaerythrit – distearat, welche beispielsweise nach Blokkieren zweier OH – Gruppen und Umsetzung mit einem langkettigen Carbonsäurechlorid hergestellt werden können. In diesen Fällen enthält die C – Atomkette von der endständigen Methylgruppe bis zur Hydroxylgruppe (bzw. bis zur daraus werdenden Urethangruppe) in der Nähe dieser Hydroxylgruppe ein O – Atom. Zu den ersteren gehört beispielsweise das 2,2 – Distearyl – 1,3 – propandiol, welches durch einfaches oder doppeltes Alkylieren von Malonsäureester mit langkettigen Alkylhalogeniden und nachfolgender Reduktion beider Estergruppen herstellbar ist.

Aliphatische Teile für A können weiterhin ein N – Atom enthalten, welches mit Hilfe langkettiger Alkylhalogenide alkyliert oder quaterniert werden kann. In einem solchen Fall enthält die C – Atomkette statt eines O – Atoms ein N – Atom.

Die beispielhaft genannten Diole können formelmäßig wie folgt dargestellt werden:

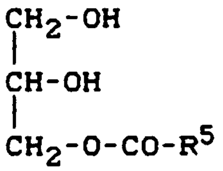
,
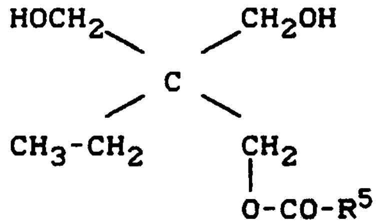
und
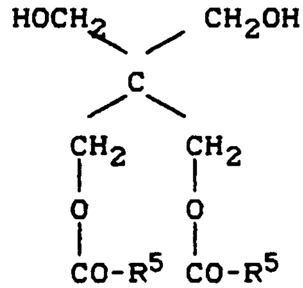

mit $R^5$ = $C_9H_{19}$, $C_{11}H_{23}$, $C_{13}H_{27}$, $C_{15}H_{31}$, $C_{17}H_{35}$ u.a.

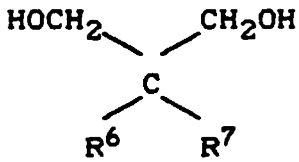
,
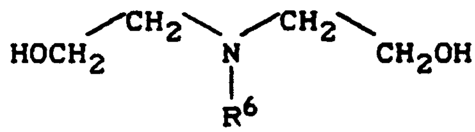

und
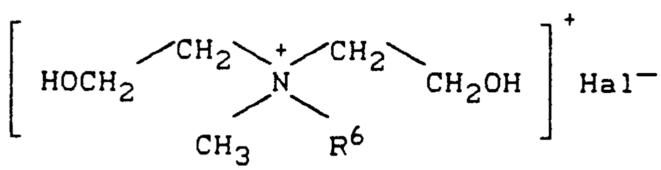

mit $R^6$ = $C_{12}H_{25}$, $C_{14}H_{29}$, $C_{16}H_{33}$, $C_{18}H_{37}$ u.a.,
$R^7$ = H oder $R^6$ und $Hal^-$ = $Cl^-$ oder $Br^-$.

In entsprechender Weise sind mit $R^3$ und/oder $R^4$ substituierte Diisocyanate über die zugrundeliegenden Diamine zugänglich.

Für den bevorzugten Fall, daß $R^3$ und $R^4$ für Wasserstoff stehen, seien als erfindungsgemäß einsetzbare Diisocyanate beispielsweise die folgenden genannt: Tetramethylendiisocyanat, Hexamethylendiisocyanat, Dodecamethylendiisocyanat, 1,4-Diisocyanato-cyclohexan, 1-Isocyanato-3-isocyanatomethyl-3,5,5-trimethyl-cyclohexan(Isophorondiisocyanat), 4,4'-Diisocyanato-dicyclohexylmethan, 4,4'-Diisocyanatodicyclohexylpropan-(2,2), 1,3- oder 1,4-Diisocyanatobenzol, 2,4- oder 2,6-Diisocyanatotoluol, bzw. Gemische dieser Isomeren, 4,4'- oder 2,4'-Diisocyanato-diphenylmethan, 4,4'-Diisocyanato-diphenylpropan-(2,2), p-Xylylen-diisocyanat und $\alpha,\alpha,\alpha',\alpha'$-Tetramethyl-m- oder -p-xylylen-diisocyanat, 1,5-Diisocyanato-naphthalin sowie aus diesen Verbindungen bestehende Gemische.

Der Polymerisationsgrad der erfindungsgemäßen Polyurethane wird durch den Index n mit Werten von 2 bis 150, bevorzugt 3 bis 100, angezeigt. Solche Polyurethane fallen im allgemeinen als Gemisch mit verschiedenen Polymerisationsgraden an. Diese Gemische können direkt zur Beschichtung fester Substrate eingesetzt werden.

Als Substrate für die erfindungsgemäßen beschichteten Träger kommen ebene oder anders gestaltete, vorzugsweise symmetrische dimensionsstabile Werkstücke in Frage. Sie können optisch transparent oder undurchlässig und elektrisch leitend, halbleitend oder isolierend sein.

Beispielsweise kann die Oberfläche eines Substrats ihrerseits aus einem Isolator mit aufgebrachter leitender Metallschicht bestehen oder umgekehrt aus einem Metall und einem Überzug aus einer isolierenden Schicht. Die Oberfläche des Substrats soll zur Erzielung der hohen Ordnung innerhalb der erfindungsgemäßen beschichteten Träger möglichst nur geringe Mikrorauhigkeiten (im Bereich von 20-100 Å nach DIN 4768) aufweisen. Außer der ebenen Form des Substrats kommt beispielsweise die Form von Zylindern oder Halbzylindern sowie von Kugelsegmenten in Frage. Durch physikalische oder chemische Behandlung kann die Oberfläche der Substrate weiterhin hydrophil oder hydrophob eingestellt worden sein. Im allgemeinen werden die Substratoberflächen vor der Beschichtung einer Reinigung unterzogen. Die festen

Substrate können sowohl aus anorganischen als auch aus organischen Materialien bestehen. Beispiele für anorganische Materialien sind Metalle und Legierungen, wie Gold, Platin, Nickel, Palladium, Aluminium, Chrom, Stahl u.a. sowie Nichtmetalle oder oxidische Stoffe wie Silicium, Siliciumdioxid, Glas, Graphit, Glimmer und keramische Werkstoffe. Aus der Gruppe der organischen Materialien seien vor allem polymere Werkstoffe, wie Polyester (Polyethylenterephthalat, Polybutylenterephthalat u.a.), Polyvinylchlorid, Polyvinylidenfluorid, Polytetrafluorethylen, Polycarbonat, Polyamid usw. genannt. Der jeweilige Verwendungszweck bestimmt die Auswahl des Substrats. Bei optischen Untersuchungen oder Anwendungen kommen somit beispielsweise transparente oder reflektierende Substrate zum Einsatz. Sind elektrische Eigenschaften von Interesse, werden metallisierte und und dadurch leitende oder halbleitende Substrate (beispielsweise Silicium oder ITO, (ITO = Indium Tin Oxide) oder aber, falls erforderlich, Isolatoren zum Einsatz kommen.

Besonders geeignet sind dimensionsstabile, flache, ebene Substrate wie Filme, Folien, Bänder usw. Die Beschichtung kann einseitig oder beidseitig erfolgen.

Im Rahmen der Langmuir-Blodgett-Technik werden Lösungen der Polyurethane hergestellt. Als Lösungsmittel kommen Methylenchlorid, Chloroform, Trichlorethan, Benzol, Hexan, Ethylacetat und ähnliche, dem Fachmann bekannte, sowie deren Mischungen in Betracht. Nur in wenigen Fällen muß man stärker polare Lösungsmittel, wie Methanol, Ethanol, Dimethylsulfoxid, Dimethylformamid oder N-Methylpyrrolidon zur Verbesserung der Löslichkeit zusetzen. Die Konzentration solcher Polyurethan-Lösungen wird im allgemeinen auf $10^{-2}$ bis $10^{-4}$ Mol/l eingestellt. Eine solche Lösung wird auf die Oberfläche einer Flüssigkeit gebracht, in der sich weder das Polyurethan noch dessen Lösungsmittel lösen. Die wichtigste dieser Flüssigkeiten ist Wasser bzw. wäßrige Lösungen von Salzen, Säuren oder Basen, bevorzugt reines Wasser. Um das Lösungsmittel der Polyurethane nicht zu stark im Wasser löslich zu machen, dürfen die obengenannten stärker polaren Lösungsmittel nur in untergeordneten Mengen eingesetzt werden.

Während das Lösungsmittel verdunstet bzw. geringe Mengen des stärker polaren Lösungsmittels vom Wasser aufgenommen werden, spreitet des darin gelöste Polyurethan und wird mit Hilfe einer beweglichen Barriere bis zum gewünschten Übertragungsdruck komprimiert, so daß eine geschlossene und im molekularen Maßstab geordnete Schicht vorliegt ("quasi-feste" oder "fest-analoge" Phase). Durch Tauchen der Träger erfolgt sodann die Beschichtung in einer so oft wiederholten Form, wie Beschichtungslagen gewünscht werden. Diese Übertragung erfolgt im allgemeinen bei einer Temperatur von 5-35°C, bevorzugt 10-30°C.

Die bei Polymeren zu beobachtende statistische Knäuelung der Ketten und andere Unregelmäßigkeiten ließen auch entsprechende Störungen der beschichteten Träger erwarten. Überraschenderweise ist dies bei den erfindungsgemäßen beschichteten Trägern in wesentlich geringerem Maße der Fall, so daß viellagige Beschichtungen mit einem hohen Ordnungsgrad und praktisch gleichen, einstellbaren Schichtdicken erzielt werden.

Beispiele

Ausgangsstoffe und Arbeitsgeräte

Die eingesetzten Polyurethane (PU) wurden auf konventionelle Weise durch Reaktion der Diole mit den Diisocyanaten in Lösung erzeugt und durch Umfällen gereinigt. Es handelt sich um die folgenden formelmäßig dargestellten PU:

PU 1: 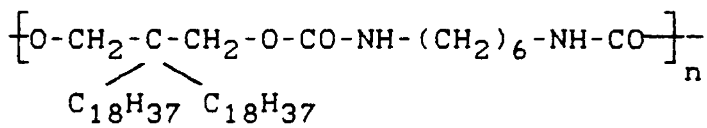

PU 2: 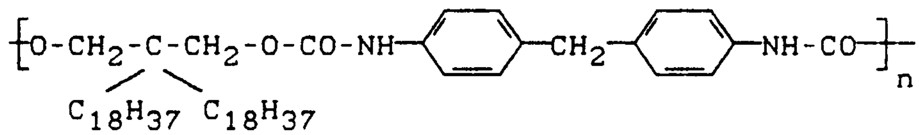

PU 3: 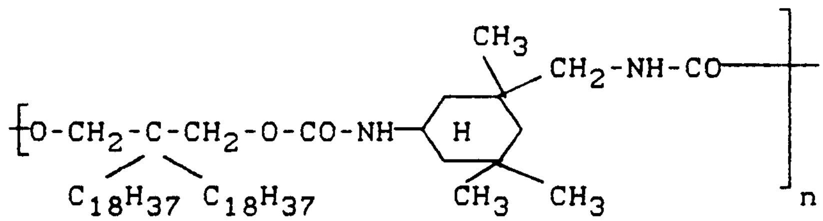

PU 4: 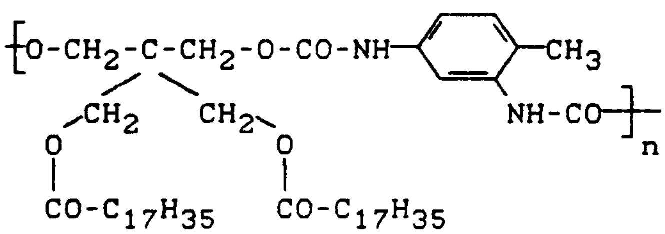

PU 5: 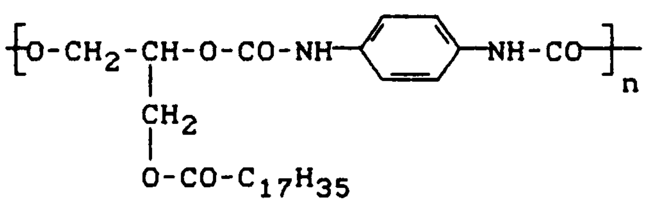

PU 6: 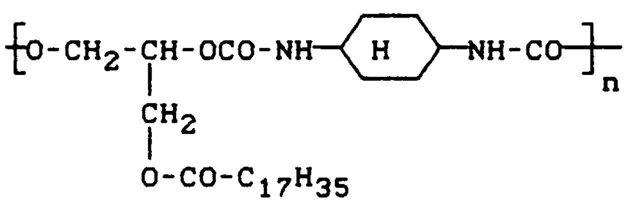

PU 7: 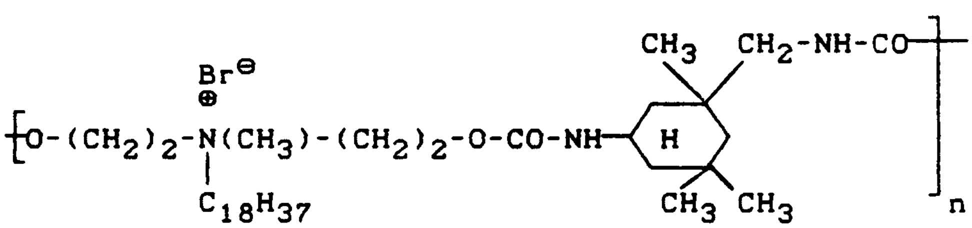

Zur Herstellung der Mono- und Multischichten wurde eine kommerziell erhältliche Filmwaage der Firma KSV Chemicals, Helsinki verwendet. Die effektiv nutzbare Trogfläche betrug bei der $\pi$/A-Isothermenmessung 1275 und bei Beschichtungsexperimenten 1175 $cm^2$. Die Vorschubgeschwindigkeit der Barriere betrug bei der $\pi$/A- Isothermenmessung 31 mm/min, das entsprach einer Flächenverringerung

von 7750 $mm^2$/min; beim Aufbau von Multischichten wurde die Barrierengeschwindigkeit jeweils dem Monoschichtverhalten angepaßt. In den Abbildungen 1.1 bis 1.5 sind verschiedene $\pi$/A – Isothermen dargestellt, von denen nur der in Abbildung 1.1 wiedergegebene Verlauf ausführlicher diskutiert wird, da die Ergebnisse direkt auf die übrigen Beispiele übertragen werden können. Abb. 1,1 wurde mit dem PU 1 aufgenommen, Abb. 1,2 mit PU 2, Abb. 1.3 mit PU 3, Abb. 1.4 mit PU 4 und Abb. 1.5 mit PU 5.

Zur Aufnahme dieser $\pi$/A – Isotherme wurden 12,11 mg Polyurethan in 10 ml Chloroform (analysenrein) gelöst (1,62 • $10^{-3}$ Mol/l). Die aufgetragene Menge betrug 100 $\mu$l. Die Messung erfolgte bei Raumtemperatur. Ein merklicher Druckanstieg trat ab etwa 75 $Å^2$/RU (RU = Repeat Unit, Wiederholungseinheit) auf. Der Kollapspunkt lag bei 40 $Å^2$/RU und einem Druck von etwa 36 mN/m. Der Flächenbedarf von 40 $Å^2$/RU am Kollapspunkt steht in guter Übereinstimmung mit dem aus der Literatur bekannten für zweikettige Amphiphile erwarteten Wert, denn der Flächenbedarf einer Alkylkette beträgt 18 – 20 $Å^2$. Das vermessene Polyurethan wurde aus einem zweikettigen Diol und einem Diisocyanat erhalten. Man erkennt, daß zum Flächenbedarf praktisch ausschließlich die beiden Alkylketten beitragen. Aus dem Verlauf der $\pi$/A – Isotherme kann daher gefolgert werden, daß das Polymerrückgrat mit seinen polaren Urethangruppen flach auf der Wasseroberfläche liegt und die unpolaren Alkylseitenketten in den Gasraum ragen. Die Orientierung der hydrophilen und der hydrophoben Gruppen ist also auch dann, wenn sie in ein Polyurethan eingebaut sind, mit dem der klassischen Amphiphile wie langkettigen Fettsäuren oder Alkoholen direkt vergleichbar.

Als Substrat für die Multischichten, deren meßtechnische Beurteilung im folgenden behandelt wird, diente in allen Fällen Silicium (Wacker – Chemitronic). Aus 1 mm dicken, beidseitig polierten Scheiben ("Wafer") von 3 Zoll Durchmesser ((100) – Fläche) wurden Plättchen von 40 mm Länge und 8 mm Breite herausgeschnitten und nach Reinigung von Staub und chemischen Kontaminationen um Ultraschallbad in der Langmuir – Blodgett – Technik beschichtet.

Eine Abmusterung der Schichtoberflächen mit Interferenzkontrast – Mikroskopie (Vergrößerung 100 – bis 500 – fach) zeigte sehr glatte, homogene Oberflächen; vereinzelt auftretende Defekte sind auf Beschädigungen des Substrates, die beim Schneiden entstanden sind, und auf Staub zurückzuführen.

Die Dicke der Multischichten wurde punktweise ellipsometrisch bei einer Wellenlänge von 632,8 nm (He – Ne – Laser) bestimmt (Gerät: Rudolf Research, Typ Auto – EL); der Einfallwinkel betrug 70°, der Durchmesser des Meßflecks ca. 1 mm. Pro Multischicht wurde über 15 bis 25 Einzelmessungen (Schrittweite 1/10 bis 1/20 Zoll mit Mikroschlitten) gemittelt; der maximale experimentelle Fehler betrug ± 0,5 Å.

Aus den Ellipsometerwinkeln $\gamma$ und $\Delta$ des Gesamtsystems (Träger und Beschichtung) und des unbeschichteten Trägers wurden die entsprechenden Winkelwerte der Schicht berechnet und daraus die Gesamtschichtdicke bestimmt.

Abbildung 2 gibt das Ergebnis einer punktweisen ellipsometrischen Schichtdickenbestimmung an einer Probe aus Tab. 1 mit Bereichen wieder, die unterschiedlich oft (10 mal, 20 mal und 30 mal) getaucht wurden, d.h. mit Bereichen, die aus Stapeln von 10, 20 und 30 Einzelschichten des PU 1 bestehen. Es besteht ein linearer Zusammenhang zwischen der Gesamtbeschichtungsdicke und der Anzahl der Tauchzyklen. Damit ist bewiesen, daß jede Einzelschicht des Polyurethans den gleichen Beitrag zur Gesamtbeschichtung liefert, d.h. das beim Aufbau der Multischichten Schicht für Schicht in gleicher Weise und reproduzierbar übertragen wird, was Voraussetzung für ein wohlgeordnetes Molekülorganisat ist. Die mittlere Dicke $d_o$ einer Einzelschicht ergibt sich aus der Steigung der Geraden in Abb. 2 ($d_o$ ist gleich Filmdicke, dividiert durch Anzahl der Schichten). Sie beträgt 22,0 ± 0,8 Å (Fehlergrenzen: Standardabweichung von 0,3 Å plus experimentellem Fehler von maximal 0,5 Å) und steht in guter Übereinstimmung mit Literaturwerten für strukturell verwandte zweikettige Phospholipide. Auf analoge Weise wurde für das PU 6 als mittlere Schichtdicke $d_o$ einer Einelschicht ein Wert von 22,7 ± 3,9 Å ermittelt.

Die Struktur der Multischichten wurde mittels Röntgenbeugung untersucht. Eingesetzt wurde ein gravitationssymmetrisches Röntgendiffraktometer (Seifert, Typ GSD) mit Cu – $K_{\alpha 1}$ – Strahlung ($\lambda$ = 1,5405 Å). Die Beugungsdiagramme wurden nur im Vorstrahlbereich $2° < 2\theta < 15°$ aufgenommen; in diesem Bereich treten noch keine Si – Reflexe auf, was durch eigene Röntgenbeugungs – Experimente am unbeschichteten Si – Substrat bestätigt wurde.

Die Messungen erfolgten in Reflexion; die Probe war so angeordnet, daß der Streuvektor senkrecht zur Schichtebene der Multischichten orientiert war, daher traten nur Reflexe mit den allgemeinen Miller – Indices n•001 (n ist eine positive ganze Zahl) auf. Abbildung 3 zeigt das so gemessene Röntgenbeugungsdiagramm für 30 Schichten des PU 1. Es sind deutlich vier Reflexe zu erkennen. Ihre geringe Intensität ist auf die geringe Anzahl der Einzelschichten und auf den niedrigen Atomformfaktor der beteiligten Atome (dieser ist propertional zur Anzahl der Elektronen des streuenden Atoms, also maximal 8 bei Sauerstoff) zurückzuführen. Die Reflexverbreiterung kann durch geringste Abweichungen im Bereich von Bruchteilen der halben Röntgen – Wellenlänge $\lambda$/2 von der idealen Perio dizität hervorgerufen werden.

Mit Hilfe der geometrischen Theorie der Röntgenbeugung (Bragg'sche Gleichung

$$2d \sin \theta = n \cdot \lambda \text{ mit } d = \frac{C_o}{n},$$

wobei die Reflexordnung eine natürliche Zahl ist) erhält man die in Tabelle 1 aufgeführte Zuordnung zwischen Reflexlagen (aus Schwerpunkten der Reflexe ermittelte Glanzwinkel $\theta$), Netzebenenabständen d und Relexordnungen n sowie den Schichtabstand $C_O$, der der Dicke einer Doppelschicht entspricht (Typ-Y-Beschichtungsprozeß).

Tabelle 1

| Reflexordnung n | Glanzwinkel $\theta$ (°) | Netzebenenabstand d (Å) | Schichtabstand $C_o$ (Å) |
|---|---|---|---|
| 2 | 2.2 | 20.6 | 41.2 |
| 3 | 3.2 | 13.8 | 41.4 |
| 4 | - | - | - |
| 5 | 5.1 | 8.7 | 43.3 |
| 6 | - | - | - |
| 7 | 7.3 | 6.1 | 42.2 |

Für den Mittelwert des Schichtabstandes erhält man $C_O$ = 42,0 Å plus/minus 1,0 Å in sehr guter Übereinstimmung mit dem ellipsometrisch ermittelten Wert. Für das PU 6 wurde an 20 Schichten auf analoge Weise ein mittlerer Netzebenenabstand $c_o$ von 42,2 ± 0,8 Å ermittelt, der einer Einzelschichtdicke von 21,1 Å entspricht. der Wert steht in guter Übereinstimmung mit dem ellipsometrisch bestimmten Einzelbeitrag je Schicht zur Gesamtschichtdicke.

Damit wurde nicht nur bewiesen, daß die aus dem Polyurethan aufgebauten Multischichten Schicht für Schicht reproduzierbar auf feste Träger übertragbar sind, sondern zusätzlich, daß dabei auch die molekulare Ordnung polymerisierter, in eine fest-analoge Phase komprimierter Moleküle erhalten bleibt. Aus der Literatur sind derartige Strukturuntersuchungen an Polymeren der beschriebenen Art nicht bekannt.

In Abb. 4 sind die Fourier-Transformations-IR-Spektren eines KBr-Preßlings (oben) und in Abb. 5 die einer Multischicht aus 52 Schichten des PU 1 auf einseitig poliertem Silicium (Orientierung 111) wiedergegeben. Die Spektren wurden in Transmission mit einem Bruker FT-IR Spektrometer (Bruker IFS 85) aufgenommen.

Das Spektrum der Multischicht (Abb.5) stellt ein Differenzspektrum dar, das nach Substraktion des Eigenspektrums des Silicumträgers erhalten wurde.

Man erkennt in beiden Spektrum deutich die für das Polyurethan charakterisitischen Absorptionsbanden in den zu erwartenden Frequenzbereichen:
NH 3355 (3360)$cm^{-1}$; CH 2918, 2850 $cm^{-1}$; CO 1698 (1699) $cm^{-1}$. Die in Klammern angegebenen Werte wurden dem Spektrum der Multischicht entnommen.

## Patentansprüche

1. Beschichtete Träger mit ultradünner, ein- oder mehrlagiger Beschichtung aus organischem Polymermaterial, dadurch gekennzeichnet, daß als Polymer Polyurethane der Struktur

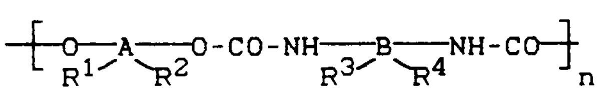

eingesetzt werden, worin

A das Gerüst eines aliphatischen, araliphatischen oder aromatischen Diols ist,
B das Gerüst eines aliphatischen, araliphatischen oder aromatischen Diisocyanats ist,
n Werte von 2 - 150, beorzugt 3 - 100, annimmt und

mindestens einer Substituenten $R^1$ bis $R^4$ einen im wesentlichen normalkettigen aliphatischen Rest darstellt und jeweils die anderen Wasserstoff bedeuten, wobei der aliphatische Rest mindestens 4 C-Atome aufweist und die Zahl der C – Atome von der endständigen Methylgruppe des aliphatischen Restes über das Gerüst A bzw. B bis zur Urethanbindung 6 bis 40 beträgt, wobei diese Kette von C – Atomen im Bereich des Gerüsts A bzw. B ein O – Atom oder N – Atom enthalten kann, und wobei ferner $R^1$ und $R^2$ gemeinsam und $R^3$ und $R^4$ gemeinsam eine Alkylenkette bilden können.

**2.** Beschichtete Träger nach Anspruch 1, dadurch gekennzeichnet, daß die Zahl der C – Atome zwischen der endständigen Methylgruppe und der Urethanbindung 8 – 30 beträgt.

**3.** Beschichtete Träger nach Anspruch 2, dadurch gekennzeichnet, daß die Zahl der C – Atome zwischen der endständigen Methylgruppe und der Urethanbindung 8 – 24 beträgt.

**4.** Beschichtete Träger nach Anspruch 1, dadurch gekennzeichnet, daß ein Polyurethan eingesetzt wird, bei dem die im wesentlichen normalkettigen aliphatischen Reste mit dem Gerüst des Diols verknüpft sind.

**5.** Beschichtete Träger nach Anspruch 4, dadurch gekennzeichnet, daß das Gerüst des Diols zwei im wesentlichen normalkettige aliphatische Reste trägt.

**6.** Beschichtete Träger nach Anspruch 1, dadurch gekennzeichnet, daß die Substituenten $R^1$ bis $R^4$ strikt normalkettig sind.

**7.** Beschichtete Träger nach Anspruch 1, dadurch gekennzeichnet, daß die Polyurethane als Gemisch mit verschiedenen Polymerisationsgraden n innerhalb des Bereiches n = 2 – 150, bevorzugt n = 3 – 100, eingesetzt werden.

**8.** Verfahren zur Herstellung von beschichteten Trägern mit ultradünner, ein – oder mehrlagiger Be – schichtung aus einem organischen Polymermaterial, dadurch gekennzeichnet, daß man eine Lösung von Polyurethanen der Struktur

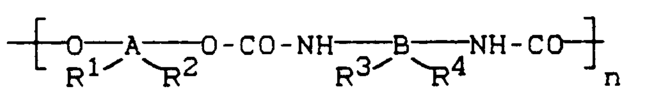 ,

in der

A das Gerüst eines aliphatischen, araliphatischen oder aromatischen Diols ist,
B das Gerüst eines aliphatischen, araliphatischen oder aromatischen Diisocyanats ist,
n Werte von 2 – 150, bevorzugt 3 – 100, annimmt und

mindestens einer der Substituenten $R^1$ bis $R^4$ einen im wesentlichen normalkettigen aliphatischen Rest darstellt und die jeweils anderen Wasserstoff bedeuten, wobei der aliphatische Rest mindestens 4 C – Atome aufweist und die Zahl der C – Atome von der endständigen Methylgruppe des aliphatischen Restes über das Gerüst A bzw. B bis zur Urethanbindung 6 bis 40 beträgt, wobei diese Kette von C – Atomen im Bereich des Gerüsts A bzw. B ein O – Atom oder N – Atom enthalten kann, und wobei ferner $R^1$ und $R^2$ gemeinsam und $R^3$ und $R^4$ gemeinsam eine Alkylenkette bilden können,

auf die Oberfläche einer Flüssigkeit, in der sich weder das Polyurethan noch dessen Lösungsmittel lösen, bringt und ein Substrat nach der Langmuir – Blodgett – Technik mit der gewünschten Anzahl von Beschichtungslagen versieht.

**9.** Verfahren zur Herstellung von beschichteten Trägern nach Anspruch 7, dadurch gekennzeichnet, daß die Flüssigkeit, in der sich weder das Polyurethan noch dessen Lösungsmittel lösen, Wasser ist.

**10.** Polyurethane als Zwischenprodukte für die beschichteten Träger der Formel

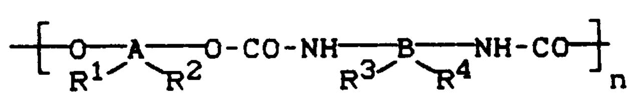 ,

in der

- A das Gerüst eines aliphatischen, araliphatischen oder aromatischen Diols ist,
- B das Gerüst eines aliphatischen, araliphatischen oder aromatischen Diisocyanats ist,
- n Werte von 2 – 150, bevorzugt 3 – 100, annimmt und

mindestens einer der Substituenten $R^1$ bis $R^4$ einen im wesentlichen normalkettigen aliphatischen Rest darstellt und jeweils die anderen Wasserstoff bedeuten, wobei der aliphatische Rest mindestens 4 C–Atome aufweist und die Zahl der C–Atome von der endständigen Methylgruppe des aliphatischen Restes über das Gerüst A bzw. B bis zur Urethanbindung 6 bis 40 beträgt, wobei diese Kette von C–Atomen im Bereich des Gerüsts A bzw. B ein O–Atom oder N–Atom enthalten kann, und wobei ferner $R^1$ und $R^2$ gemeinsam und $R^3$ und $R^4$ gemeinsam eine Alkylenkette bilden können.

**Claims**

**1.** Coated supports with ultra–thin, single–layer or multi–layer coating of organic polymer material, characterized in that, as polymer, polyurethanes of the structure

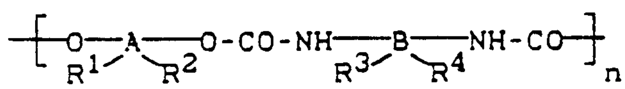

are used in which

- A is the skeleton of an aliphatic, araliphatic or aromatic diol,
- B is the skeleton of an aliphatic, araliphatic or aromatic diisocyanate,
- n assumes values of 2 – 150, preferably 3 – 100, and

at least one of the substituents $R^1$ to $R^4$ represents an essentially normal–chain aliphatic radical and the others in each case denote hydrogen, the aliphatic radi–cal having at least 4 carbon atoms and the number of carbon atoms from the terminal methyl group of the aliphatic radical via the skeleton A or B up to the urethane linkage being 6 to 40, it being possible for this chain of carbon atoms to contain an O atom or N atom in the region of the skeleton A or B, and it being further possible for $R^1$ and $R^2$ jointly to form an alkylene chain and for $R^3$ and $R^4$ jointly to form an alkylene chain.

**2.** Coated supports according to Claim 1, characterized in that the number of carbon atoms between the terminal methyl group and the urethane linkage is 8–30.

**3.** Coated supports according to Claim 2, characterized in that the number of carbon atoms between the terminal methyl group and the urethane linkage is 8–24.

**4.** Coated supports according to Claim 1, characterized in that a polyurethane is used in which the essentially normal–chain aliphatic radicals are linked to the skeleton of the diol.

**5.** Coated supports according to Claim 4, characterized in that the skeleton of the diol carries two essentially normal–chain aliphatic radicals.

**6.** Coated supports according to Claim 1, characterized in that the substituents $R^1$ to $R^4$ are strictly normal–chain.

**7.** Coated supports according to Claim 1, characterized in that the polyurethanes are used as a mixture with different degrees of polymerization n within the range n = 2 – 150, preferably n = 3 – 100.

**8.** Process for the production of coated supports with ultra–thin, single–layer or multi–layer coating of an organic polymer material, characterized in that a solution of polyurethanes of the structure

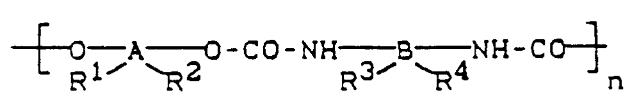

in which

A is the skeleton of an aliphatic, araliphatic or aromatic diol,

B is the skeleton of an aliphatic, araliphatic or aromatic diisocyanate,

n assumes values of 2 − 150, preferably 3 − 100, and

at least one of the substituents $R^1$ to $R^4$ represents an essentially normal−chain aliphatic radical and the others in each case denote hydrogen, the aliphatic radical having at least 4 carbon atoms and the number of carbon atoms from the terminal methyl group of the aliphatic radical via the skeleton A or B up to the urethane linkage being 6 to 40, it being possible for this chain of carbon atoms to contain an O atom or N atom in the region of the skeleton A or B, and it being further possible for $R^1$ and $R^2$ jointly to form an alkylene chain and for $R^3$ and $R^4$ jointly to form an alkylene chain,

is applied to the surface of a liquid in which neither the polyurethane nor its solvent dissolve and a substrate is provided by the Langmuir−Blodgett technique with the desired number of coating layers.

**9.** Process for the production of coated supports according to Claim 7, characterized in that the liquid in which neither the polyurethane nor its solvent dissolves is water.

**10.** Polyurethanes as intermediates for the coated supports, of the formula

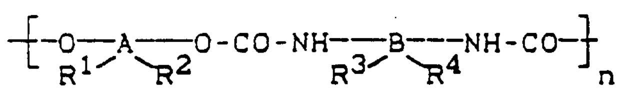

in which

A is the skeleton of an aliphatic, araliphatic or aromatic diol,

B is the skeleton of an aliphatic, araliphatic or aromatic diisocyanate,

n assumes values of 2 − 150, preferably 3 − 100, and

at least one of the substituents $R^1$ to $R^4$ represents an essentially normal−chain aliphatic radical and the others in each case denote hydrogen, the aliphatic radical having at least 4 carbon atoms and the number of carbon atoms from the terminal methyl group of the aliphatic radical via the skeleton A or B up to the urethane linkage being 6 to 40, it being possible for this chain of carbon atoms to contain an O atom or N atom in the region of the skeleton A or B, and it being further possible for $R^1$ and $R^2$ jointly to form an alkylene chain and for $R^3$ and $R^4$ jointly to form an alkylene chain.

## Revendications

**1.** Support revêtu par un revêtement ultramince à une ou plusieurs couches d'une substance polymère organique, qui sont caractérisés en ce que l'on utilise comme polymère des polyuréthannes de formule :

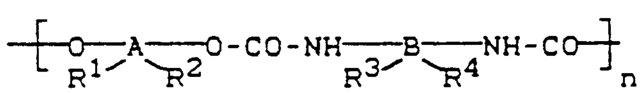

dans laquelle

A est le squelette d'un diol aliphatique, araliphatique ou aromatique,

B est le squelette d'un diisocyanate aliphatique, araliphatique ou aromatique,

n prend des valeurs de 2 à 150 et

l'un au moins des substituants $R^1$ à $R^4$ représente un reste aliphatique essentiellement à chaîne normale et les autres représentent chaque fois l'hydrogène, le reste aliphatique ayant au moins 4 atomes de carbone et le nombre des atomes de carbone depuis le groupe méthyle terminal du reste aliphatique jusqu'au groupe uréthanne en passant par le squelette A ou B, respectivement, étant de 6 à 40, cette chaîne d'atomes de carbone pouvant contenir un atome d'oxygène ou un atome d'azote dans le domaine du squelette A ou B, respectivement, et en outre, $R^1$ et $R^2$, pris ensemble, et $R^3$ et $R^4$, pris ensemble, pouvant former une chaîne alkylène.

**2.** Support revêtu selon la revendication 1, caractérisé en ce que le nombre des atomes de carbone entre le groupe méthyle et le groupe uréthanne est de 8 – 30.

**3.** Support revêtu selon la revendication 2, caractérisé en ce que le nombre des atomes de carbone entre le groupe méthyle terminal et le groupe uréthanne est de 8 – 24.

**4.** Support revêtu selon la revendication 1, caractérisé en ce que l'on utilise un polyuréthanne dans lequel les restes aliphatiques essentiellement à chaîne normale sont reliés au squelette du diol.

**5.** Support revêtu selon la revendication 4, caractérisé en ce que le squelette du diol porte deux restes aliphatiques essentiellement à chaîne normale.

**6.** Support revêtu selon la revendication 1, caractérisé en ce que les substituants $R^1$ à $R^4$ sont strictement à chaîne normale.

**7.** Support revêtu selon la revendication 1, caractérisé en ce que les polyuréthannes sont utilisés sous forme de mélange de produits de degrés de polymérisation n différents dans la gamme de n = 2 – 150, de préférence n = 3 – 100.

**8.** Procédé pour la fabrication de supports revêtus par un revêtement ultramince à une ou plusieurs couches d'une substance polymère organique, caractérisé en ce que l'on place une solution de polyuréthannes de formule

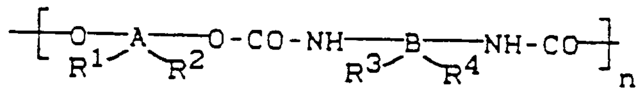 ,

dans laquelle
A est le squelette d'un diol aliphatique, araliphatique ou aromatique,
B est le squelette d'un diisocyanate aliphatique, araliphatique ou aromatique,
n prend des valeurs de 2 à 150 et
l'un au moins des substituants $R^1$ à $R^4$ représente un reste aliphatique essentiellement à chaîne normale et les autres représentent chaque fois l'hydrogène, le reste aliphatique ayant au moins 4 atomes de carbone et le nombre des atomes de carbone depuis le groupe méthyle terminal du reste aliphatique jusqu'au groupe uréthanne en passant par le squelette A ou B, respectivement, étant de 6 à 40, cette chaîne d'atomes de carbone pouvant contenir un atome d'oxygène ou un atome d'azote dans le domaine du squelette A ou B, respectivement, et en outre, $R^1$ et $R^2$, pris ensemble, et $R^3$ et $R^4$, pris ensemble, pouvant former une chaîne alkylène, sur la surface d'un liquide dans lequel ni le polyuréthanne, ni son solvant ne se dissolvent et on applique sur un support le nombre désiré de couches de revêtement par la technique de Langmuir – Blodgett.

**9.** Procédé pour la fabrication de supports revêtus selon la revendication 7, caractérisé en ce que le liquide dans lequel ni le polyuréthanne, ni son solvant ne se dissolvent est l'eau.

**10.** Polyuréthannes comme produits intermédiaires pour les supports revêtus, de formule

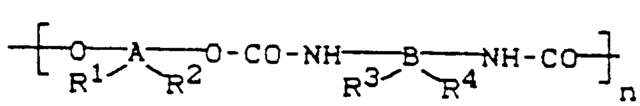 ,

dans laquelle
A est le squelette d'un diol aliphatique, araliphatique ou aromatique,
B est le squelette d'un diisocyanate aliphatique, araliphatique ou aromatique,
n prend des valeurs de 2 à 150 et
l'un au moins des substituants $R^1$ à $R^4$ représente un reste aliphatique essentiellement à chaîne

normale et les autres représentent chaque fois l'hydrogène, le reste aliphatique ayant au moins 4 atomes de carbone et le nombre des atomes de carbone depuis le groupe méthyle terminal du reste aliphatique jusqu'au groupe uréthanne en passant par le squelette A ou B, respectivement, étant de 6 à 40, cette chaîne d'atomes de carbone pouvant contenir un atome d'oxygène ou un atome d'azote dans le domaine du squelette A ou B, respectivement, et en outre, $R^1$ et $R^2$, pris ensemble, et $R^3$ et $R^4$, pris ensemble, pouvant former une chaîne alkylène.

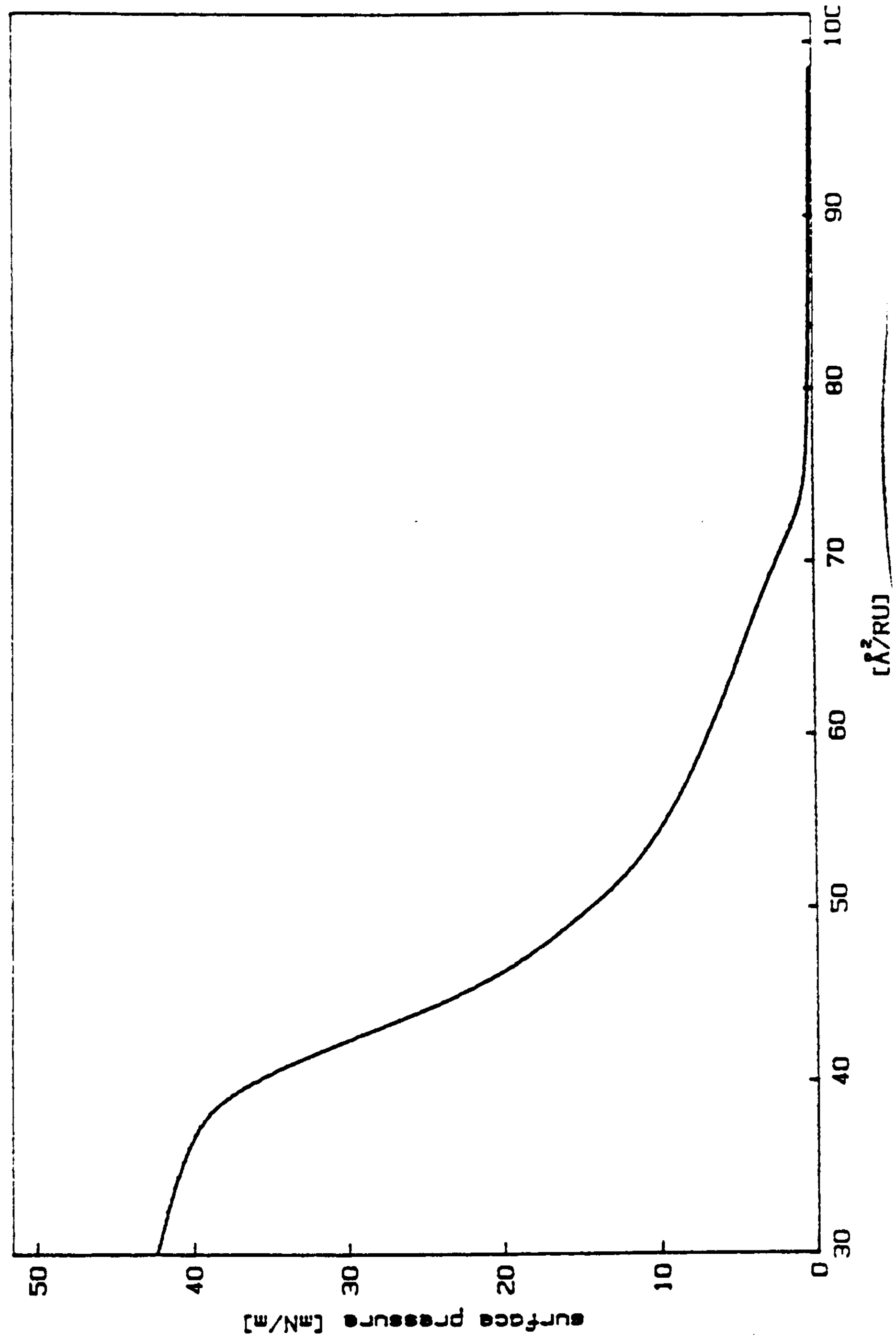
surface pressure [mN/m]
0
10
20
30
40
50
[Å²/RU]
30
40
50
60
70
80
90
100

Abb. 1.1

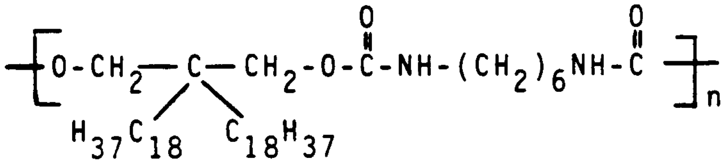

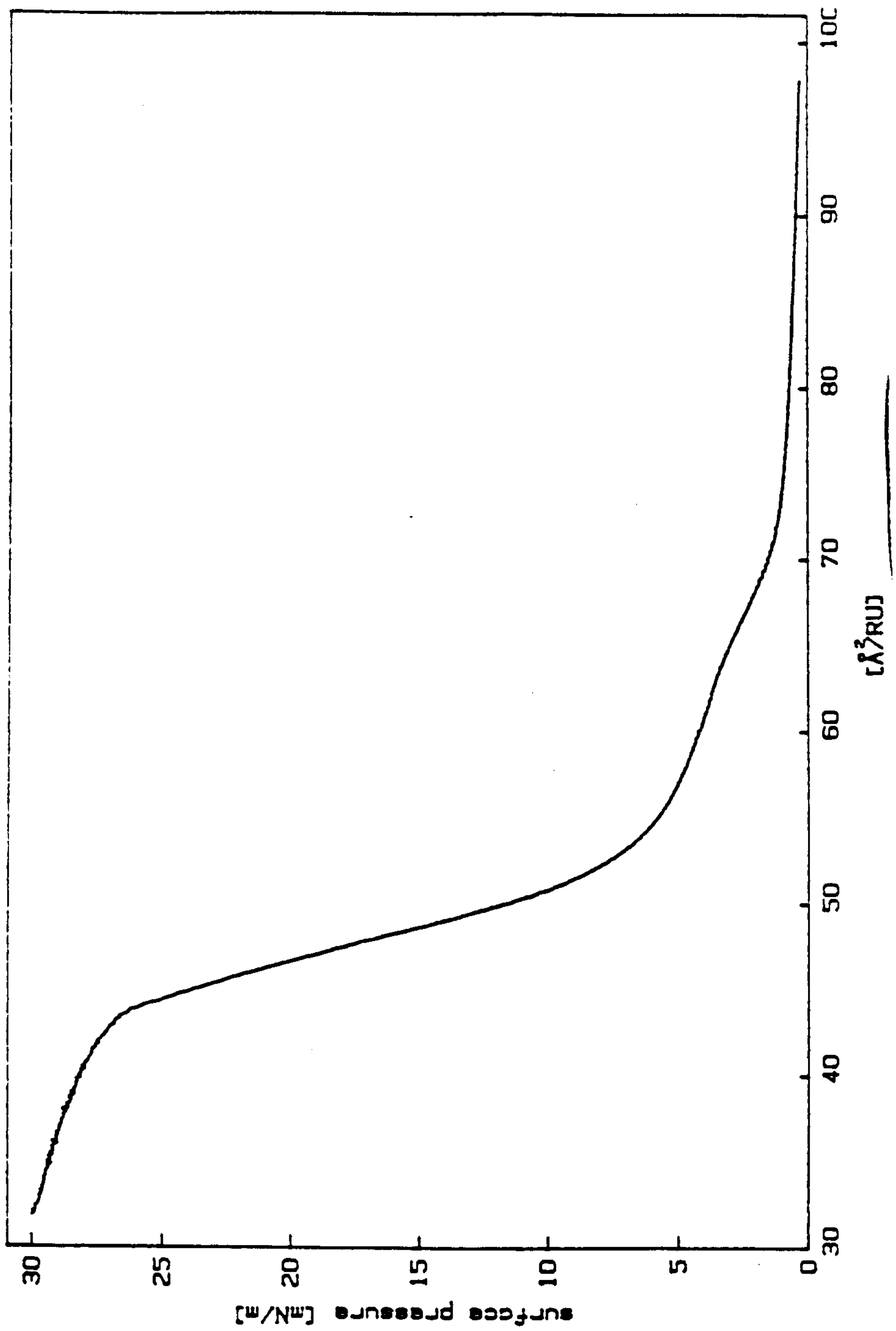
surface pressure [mN/m]
[Å²/RU]
0
5
10
15
20
25
30
30
40
50
60
70
80
90
100

Abb. 1.2

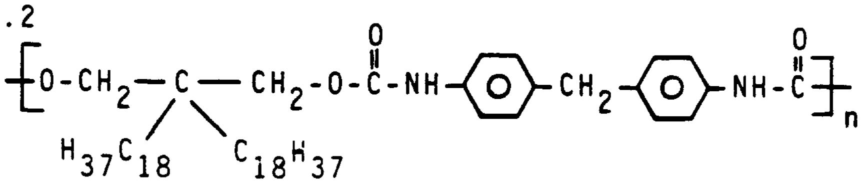

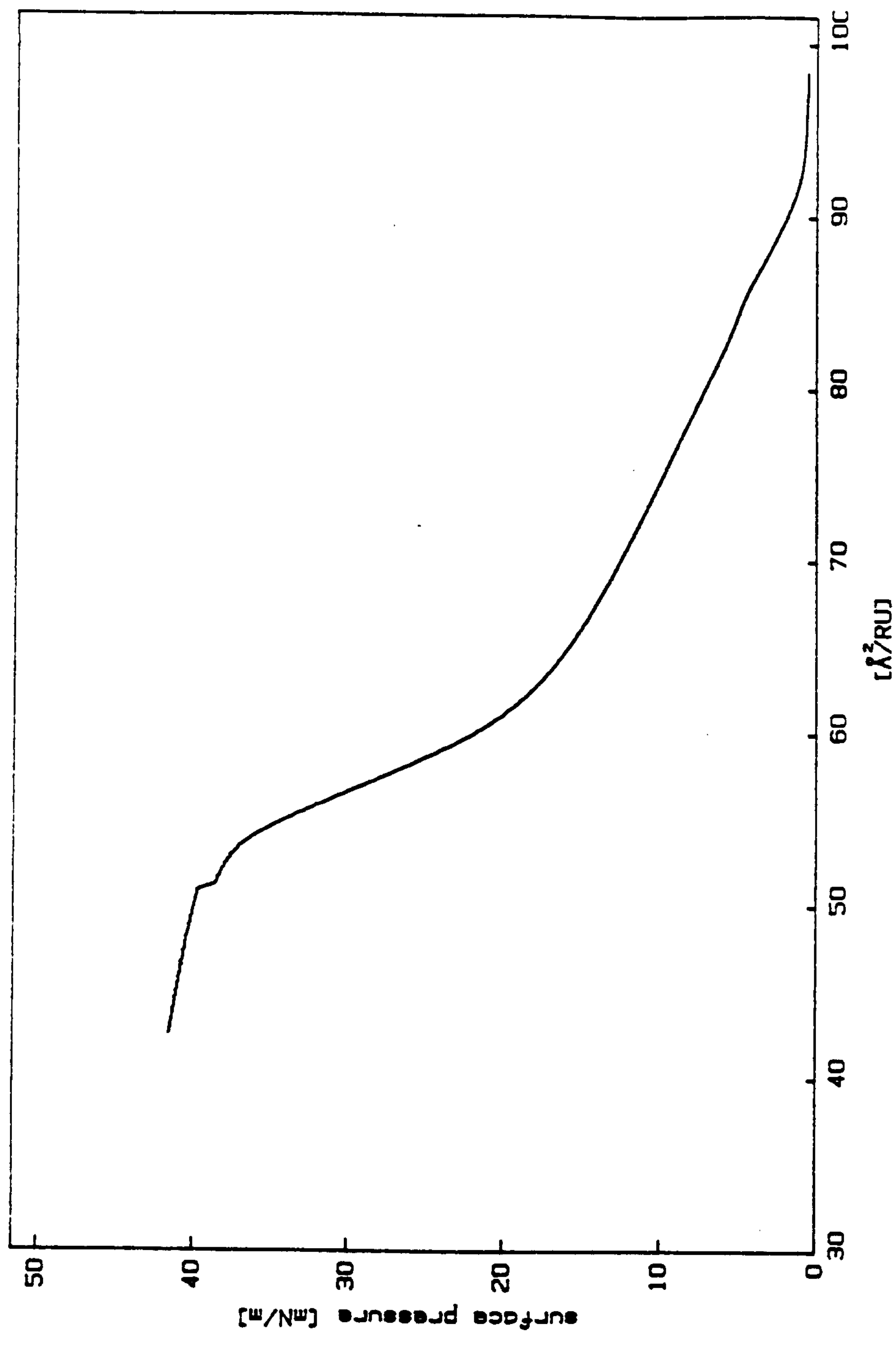
surface pressure [mN/m]
0
10
20
30
40
50
[Å²/RU]
30
40
50
60
70
80
90
100

Abb. 1.3

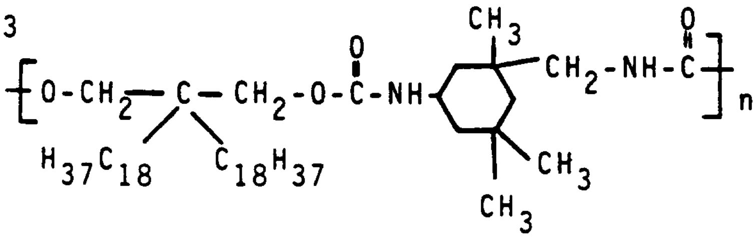

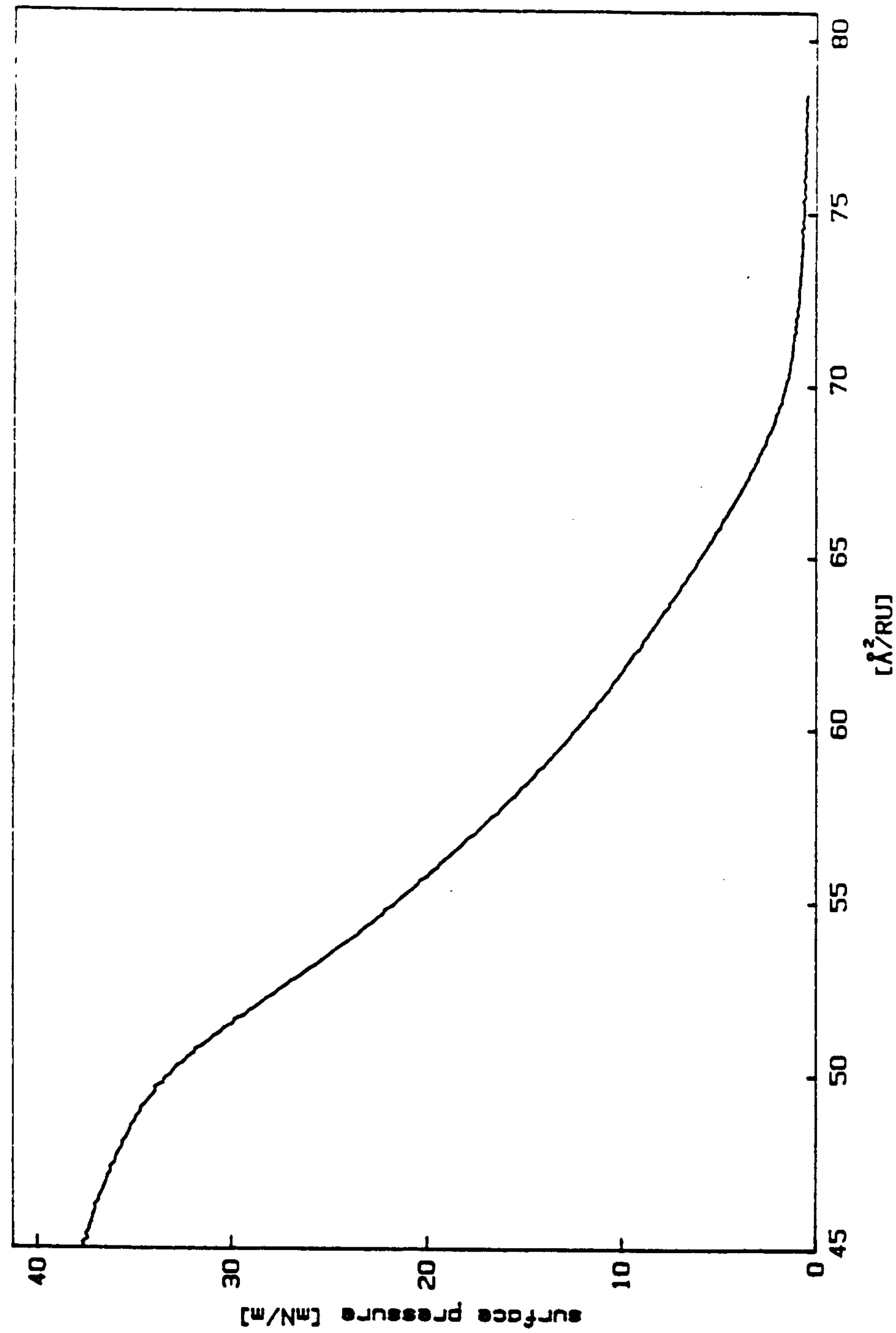


Abb. 1.4

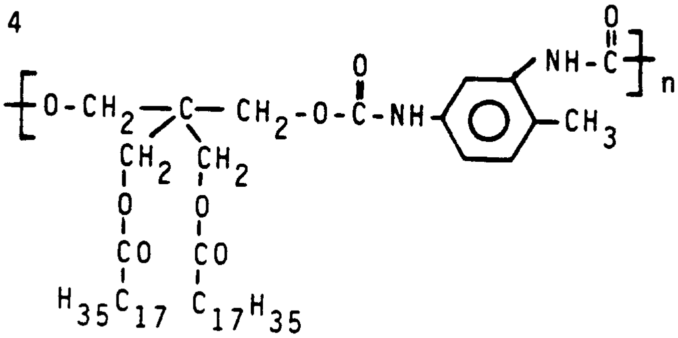

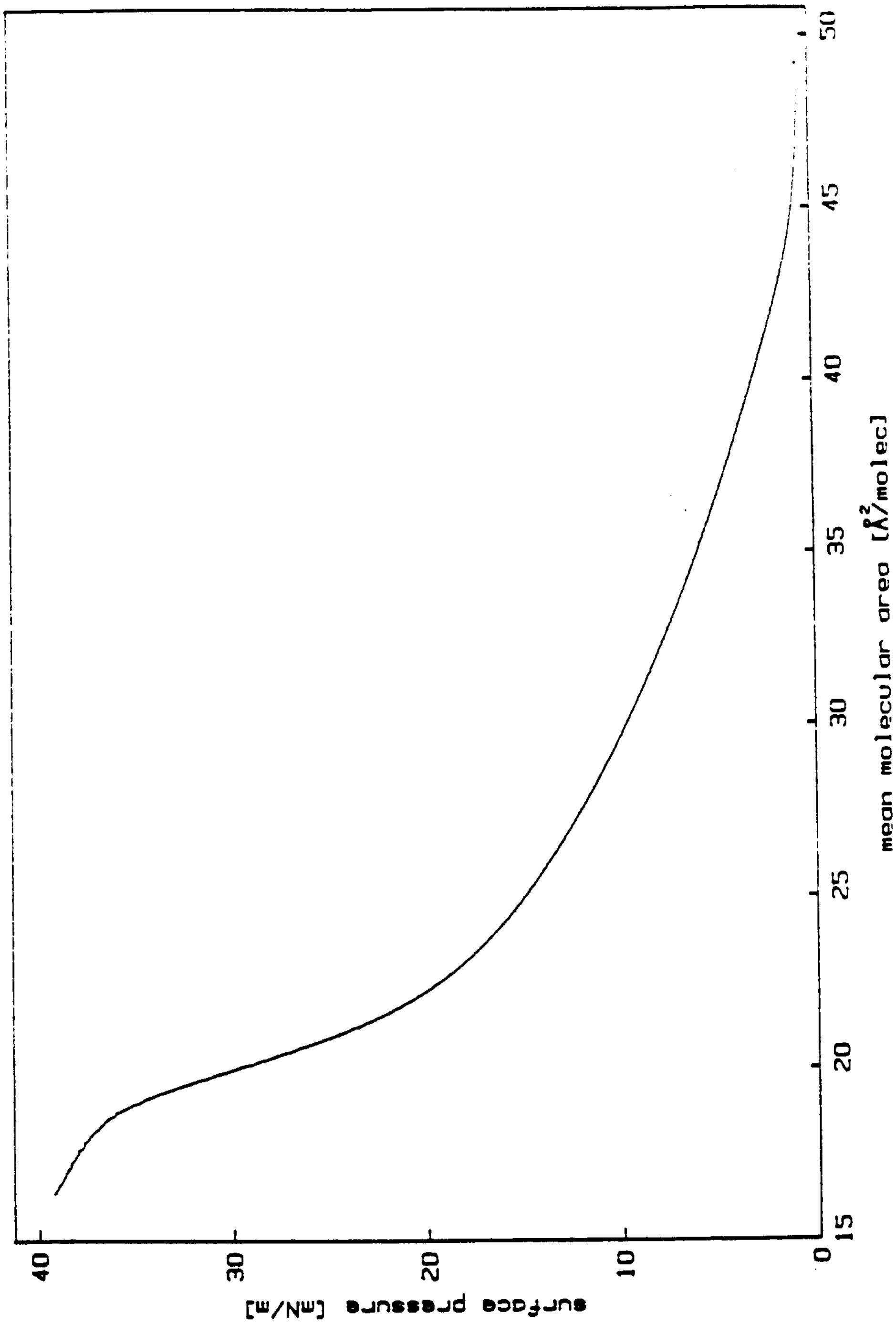
surface pressure [mN/m]
0
10
20
30
40
mean molecular area [Å²/molec]
15
20
25
30
35
40
45
50

Abb. 1.5

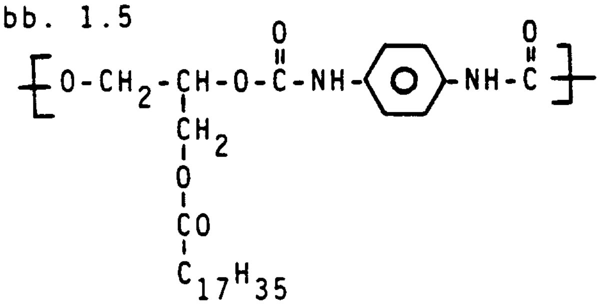

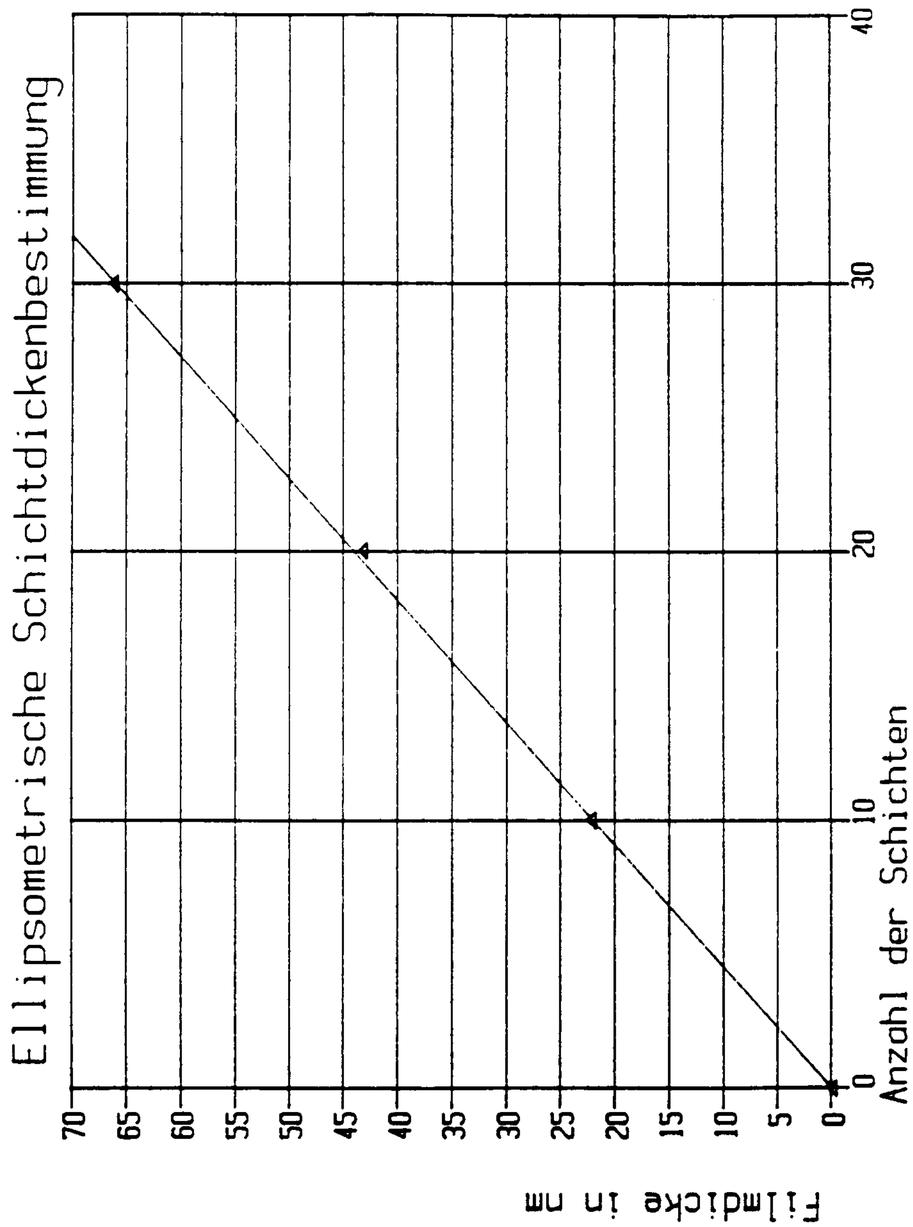
Ellipsometrische Schichtdickenbestimmung
Filmdicke in nm
70
65
60
55
50
45
40
35
30
25
20
15
10
5
0
Anzahl der Schichten
0
10
20
30
40

Abb. 2

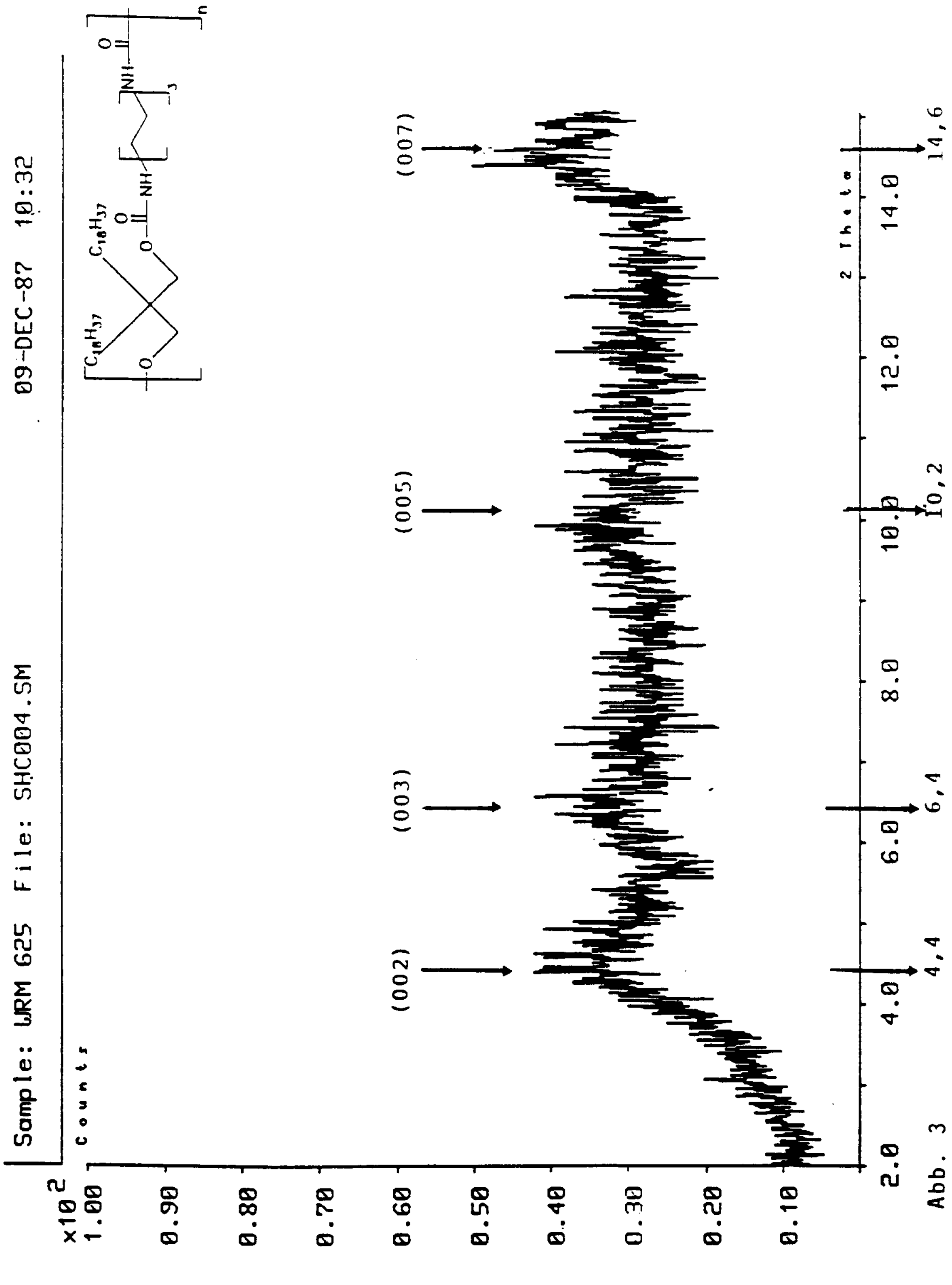
Sample: WRM 625 File: SHC004.SM
09-DEC-87 10:32
Counts
x10^2
1.00
0.90
0.80
0.70
0.60
0.50
0.40
0.30
0.20
0.10
(002)
(003)
(005)
(007)
4,4
6,4
10,2
14,6
2.0
4.0
6.0
8.0
10.0
12.0
14.0
2 Theta

Abb. 3

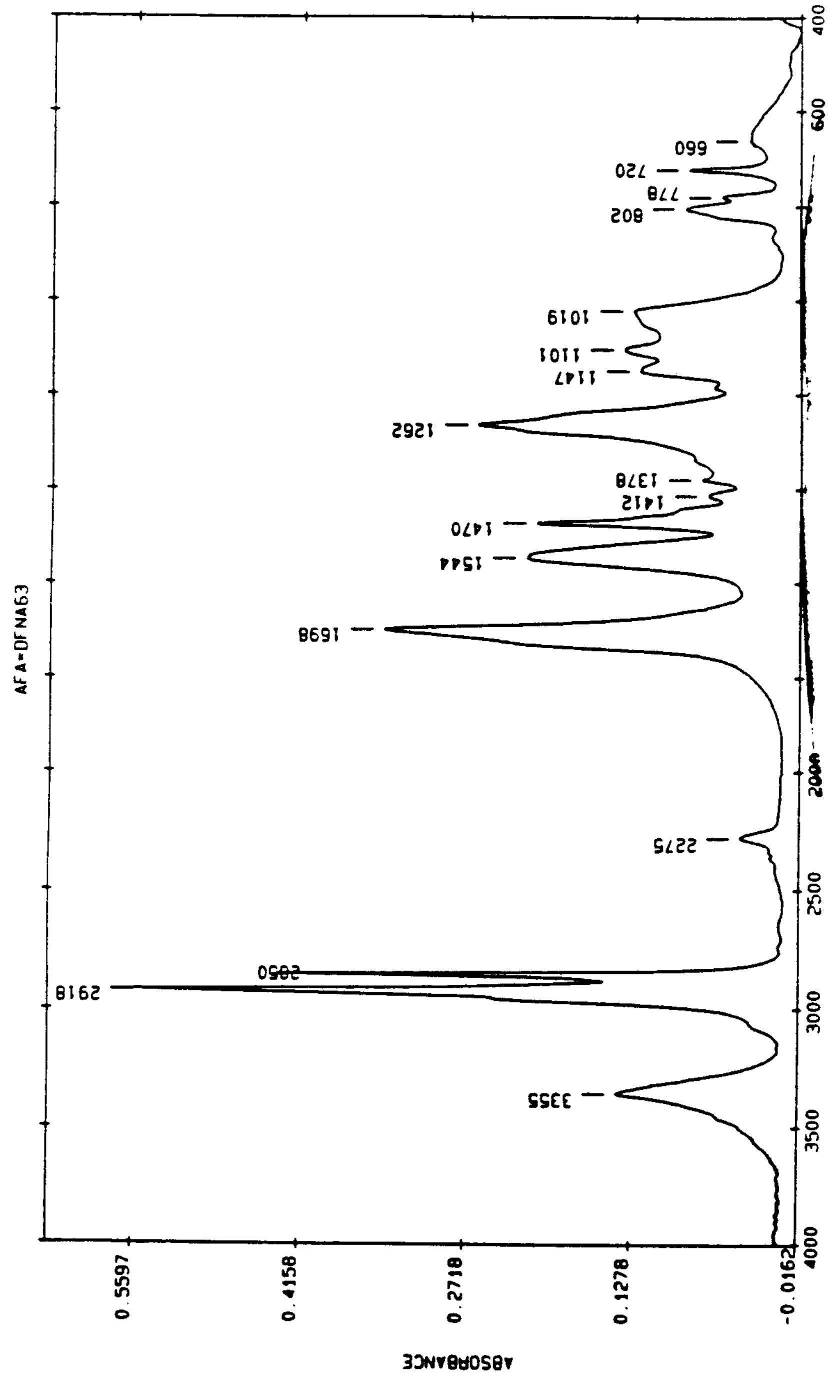
AFA-DFNA63
ABSORBANCE
0.5597
0.4158
0.2718
0.1278
-0.0162
4000
3500
3000
2500
2000
600
400
3355
2918
2850
2275
1698
1544
1470
1412
1378
1262
1147
1101
1019
802
778
720
660

Abb. 4

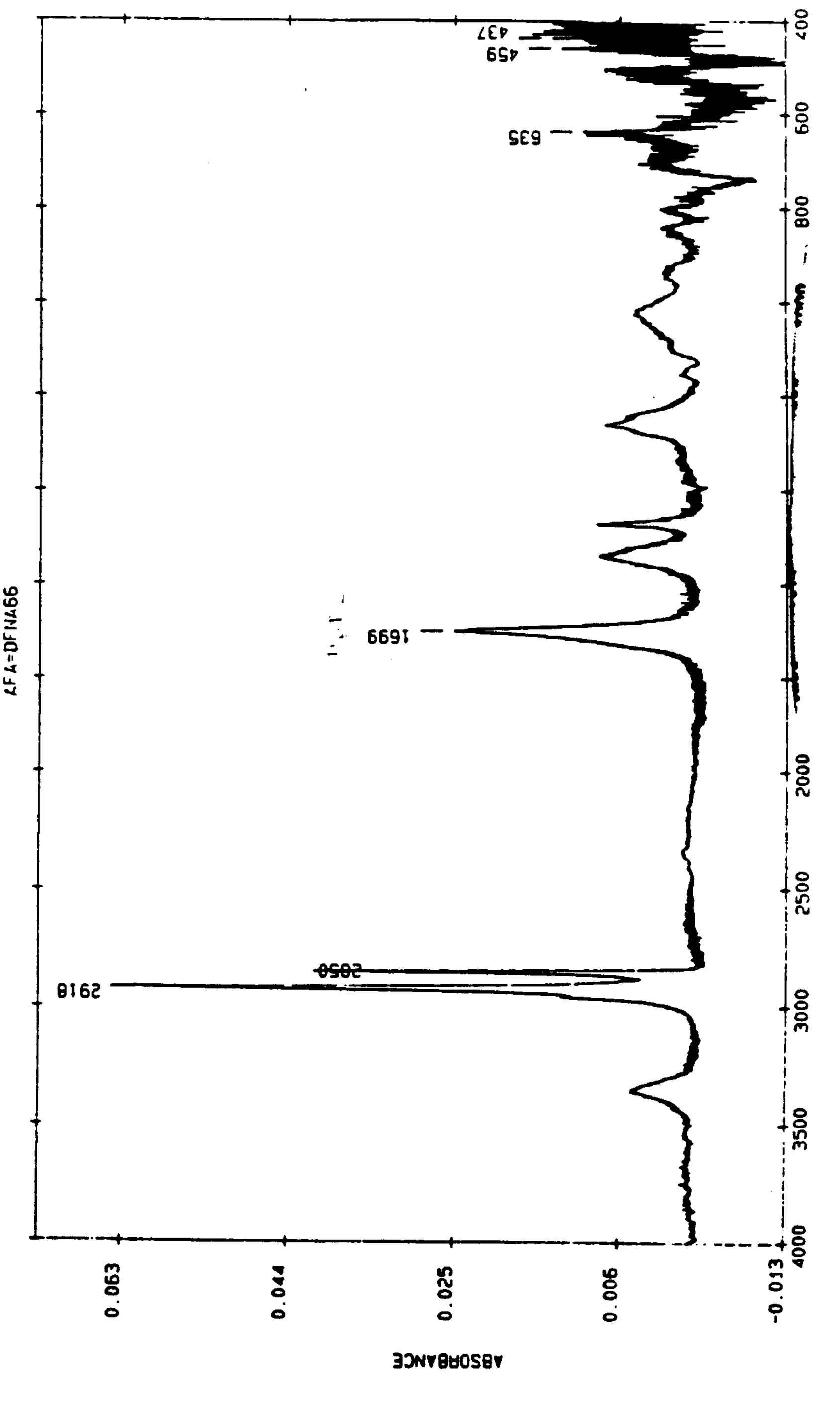
ABSORBANCE
0.063
0.044
0.025
0.006
-0.013
4000
3500
3000
2500
2000
800
600
400
2918
2850
1699
635
459
437

Abb. 5